# EUROPEAN PATENT APPLICATION

(11) **EP 2 590 073 A1**
(43) Date of publication of application: **08.05.2013**
(21) Application number: 11187427.7
(22) Date of filing: 02.11.2011
(51) Int. Cl.: G06F 9/445

(54) **Method and system for on-demand patch generation and management**

(71) Applicant: Research In Motion Limited, Waterloo, ON N2L 3W8 (CA)
(72) Inventor: Quin, Spencer Leavitt George, Waterloo, Ontario N2L 3W8 (CA); Parry, Thomas Owen, Waterloo, Ontario N2L 3W8 (CA); Feldman, Andrey, Waterloo, Ontario N2L 3W8 (CA); Provencher, Marc Andrew, Waterloo, Ontario N2L 3W8 (CA)
(74) Representative: Patel, Binesh

(57) **Abstract**

Methods and system for on-demand patching of mobile device software bundles. A server pre-loaded with available bundles receives an update request from a mobile device and information regarding the current software bundle on the mobile device and the selected bundle requested by the mobile device. The server determines whether a patch exists and, if not, and if the server has a copy of the current software bundle, then the server generates a patch from the current software bundle to the selected software bundle. The patch may be tested and may be compressed prior to transmission to the mobile device. The server may filter available bundles to identify a list of bundles to which the mobile device is entitled to upgrade based on a number of criteria, including device type, vendor/carrier, user ID, current software bundle, geographic location and other factors.

## Description

### FIELD

The present application generally relates to software updates and, in particular, to the management and generation of software patches on demand.

### BACKGROUND

Updating software on a deployed mobile device can be a complex problem. Companies that have a large number of devices in the field may have hundreds or thousands of possible software bundles or builds to manage and maintain. Providing an upgrade path from each possible build to each possible upgraded build can result in needing to generate, store, and manage, an unwieldy number of patches. Selective generation of patches can leave some mobile devices stranded without an upgrade path.

### BRIEF SUMMARY

In one aspect, the present application describes a method for administrating on-demand software updates for mobile devices from a server. The method includes receiving, at the server, an update request from a mobile device, information that identifies a current software bundle resident on the mobile device, and a selection of an updated software bundle; determining that a patch from the current software bundle to the updated software bundle is unavailable on the server; generating the patch at the server in response to the update request; and transmitting the patch to the mobile device.

In another aspect, the present application describes a server for administrating on-demand software updates for mobile devices. The server includes a processor; memory storing available bundles; and one or more processor-executable software modules. When executed, the modules configure the processor to receive, at the server, an update request from a mobile device, information that identifies a current software bundle resident on the mobile device, and a selection of an updated software bundle from the available bundles; determine that a patch from the current software bundle to the updated software bundle is unavailable on the server; generate the patch at the server in response to the update request; and transmit the patch to the mobile device.

Other aspects and features of the present application will be understood by those of ordinary skill in the art from a review of the following description of examples in conjunction with the accompanying figures.

### BRIEF DESCRIPTION OF THE DRAWINGS

Reference will now be made, by way of example, to the accompanying drawings which show example embodiments of the present application, and in which:

Figure 1 diagrammatically shows an example system for on-demand patching of mobile device software bundles;

Figure 2 shows, in flowchart form, an example method for on-demand patching of mobile device software bundles; and

Figure 3 shows a simplified block diagram of an example server.

Similar reference numerals may have been used in different figures to denote similar components.

### DESCRIPTION OF EXAMPLE EMBODIMENTS

The present application refers to the software on a mobile device as a "build" or "bundle". A build or bundle includes the operating system and core applications. In addition to a build or bundle, a mobile device may have individual applications ("apps") that have been downloaded and added to the mobile device over time. The term "software bundle" is used interchangeably herein with "bundle", "build" and "software build".

Modern mobile devices are complex devices driven by intricate software bundles. Many mobile device manufacturers create and deploy a large number of device models. In some instances, those models may feature custom software builds tailored to the needs of a particular mobile network operator/carrier or other vendor. Over time, a mobile device manufacturer may have hundreds of models and thousands of software builds in the public. In addition, within the manufacturer and related companies, non-public builds may proliferate as software tweaks and updates are tried and tested.

Migration to a new build can be done in at least two ways. In some cases changes may be implemented using a patch, particularly when two builds are not significantly different. The patch may add, edit, and/or delete all or part of a source binary in order to create the desired destination binary. A binary difference algorithm may be used in some patch generation processes. In some patching processes, various optimizations may be implemented to improve the efficiency and minimize the patch size. Over-the-air-software-loading (OTASL) is commonly used to distributed patches. Web software loading (WebSL) may be used to distribute full builds for more substantial changes to the bundle. In some cases the full build may be compressed to minimize the file size of the build.

The usual approach to managing software updates for mobile devices is driven and controlled by software administrators within the mobile device manufacturer. In general, a new build is created and then patches are created as upgrade paths from selected old builds to the new build. The administrator has the responsibility for determining which old builds will require a patch to the new build. Policies may govern which builds are available to which devices running which old builds. The patches are then tested to confirm that they result in a match to the new build. Once the patch is tested, the administrator publishes the patch to make it available to users in the field. In particular, the administrator makes the patch available within a file server or database accessible to mobile devices through a control and/or download server. The full build may also be made available through the file server or database.

A typical build/bundle may feature thousands of individual files. A large mobile device manufacturer with many product lines may produce dozens of builds in a week, some of which are for the public at large and some of which may be for internal use by testers/developers. Patches may proliferate exponentially, *e*.*g*. at the rate of hundreds to thousands per week. It will be appreciated that the administrators may not create a patch to a new build from every previous build ever deployed, as this would result in an enormous number of patches to create, test, and manage. Accordingly, the administrators may be selective in the patches they create. This creates a potential problem in that some devices running particular builds may become "stranded" without an upgrade path to a new build.

The present application proposes a system architecture and process in which patches are generated on-demand. As a result, administrators are not required to determine which patches should be generated and the risk of stranding existing devices is eliminated. Moreover, the system and process may be configured to gather data regarding builds in the field and patches applied, so that a running inventory of existing builds/devices is developed.

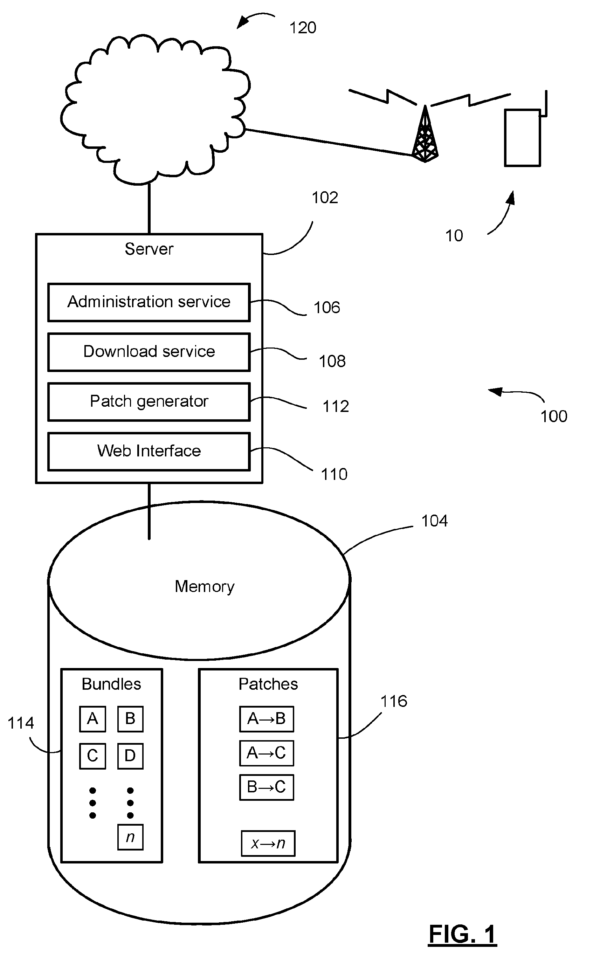

Reference is first made to Figure 1, which diagrammatically shows an example system 100 in accordance with one aspect of the present application.

The system 100 includes a server 102 and associated memory 104. The memory 104 may include any suitable non-transitory computer-readable memory structured in a suitable format. In some instances, the memory 104 may be structured as a database. In some cases, it may be structured as a file system. Other data structures suitable to a particular implementation may also be used.

The memory 104 contains bundles (i.e. builds) 114. The bundles 114 may be indexed and may have associated with them a set of permissions. For example, one or more bundles 114 may be restricted to particular device types, versions, models, geographic locations, etc. One or more bundles 114 may only be available to devices associated with a particular mobile network operator or other vendor. Some bundles 114 may be restricted to a particular subset of users, such as those having particular permissions on the server 102. The memory 104 further stores patches 116, as will be described further below.

The server 102 includes an administration service 106, a download service 108, a web service or web interface 110, and a patch generator 112. The administration service 106 provides an interface through which an administrator may manage the server 102 and may add or remove bundles 114 from the memory 104.

The web interface 110 *(i.e.* web service) manages communications with remote devices, such as example mobile device 10, over a network 120. The network 120 may include a combination of wired and wireless networks. The device 10 may connect to the network 120 using cellular, WiFi, or other wireless communications technologies, or the device 10 may connect to the network 120 through a personal computer or other wired access device. If connected through a personal computer, the personal computer may run software that causes the computer to act as a proxy so that the device 10 is able to use the computer's wired (or wireless) network connection.

The web interface 110 is configured to receive update requests or inquiries from mobile devices 10, and to provide them with upgrade availability information. The download service 108 is configured to manage the download of a particular bundle 114 or patch 116 to the requesting mobile device 10.

On receiving an update request, the web interface 110 obtains information regarding the mobile device 10 and the current bundle on the mobile device. This information may be provided by the mobile device 10 in its initial inquiry, or the web interface 110 may prompt the mobile device 10 to provide this information. In any event, the web interface 110 receives the current bundle information and information regarding the mobile device (which in some embodiments may include mobile device type, model, vendor, carrier, user ID, etc.) and determines which of the bundles 114 in the memory 104 are available to the mobile device 10. A query may be generated based on the current bundle and mobile device information, and the memory 104 (if structured as a database in this example) returns a list of the builds available to the mobile device 10.

The mobile device 10 specifies a particular bundle to which it wants an upgrade. The web interface 110 or other element of the server 102 may then determine whether a patch 116 exists already in the memory 104 for upgrading from the current bundle to the selected bundle. If so, then the download service 108 manages transmission of the patch 116 to the mobile device 10. If not, then the patch generator 112 may create a new patch.

The patch generator 112 may generate a patch using a binary difference algorithm or other patch generation process for upgrading from the current bundle to the selected bundle. The patch generator 112 may first determine whether a copy of the current bundle is available in the memory 104. If a copy of the current bundle is unavailable, the patch process may be terminated. In some embodiments, an error or alert message may be generated to the mobile device 10 and/or to an administrator advising of the missing current bundle.

If the current bundle is not available in the memory 104, then the server 102 may be configured to offer download of the full selected bundle 114 instead of a patch. The mobile device 10 may be given the option of selecting a full download. The offer of a full download may, in some embodiments, be dependent upon the characteristics of the channel over which the mobile device 10 is connected to the network 120. For example, a full download may be excessively expensive and slow over a 2G or 3G data connection, whereas a 4G, WiFi, or wired connection may have sufficient bandwidth to offer a full download. In some cases, the mobile device 10 may be given the option of a full download irrespective of the characteristics of its connection. The download service 108 may use various compression techniques and/or multiple-server seeding techniques to facilitate fast download.

If a copy of the current bundle is available in the memory 104, then the patch generator 112 may generate a patch 116 to migrate from the current bundle to the selected bundle. The patch generator 112 may use any suitable patch generation process for a given implementation. The patch generator 112 may subsequently test the generated new patch by applying the patch to the copy of the current bundle to produce an updated bundle, and then performing a binary comparison of the updated bundle to the selected bundle to confirm they are identical. Once the new patch is generated, the download service 108 handles the transmission of the patch to the mobile device 10. The new patch is then indexed and stored in memory 104 in case any other mobile device requests the same upgrade path.

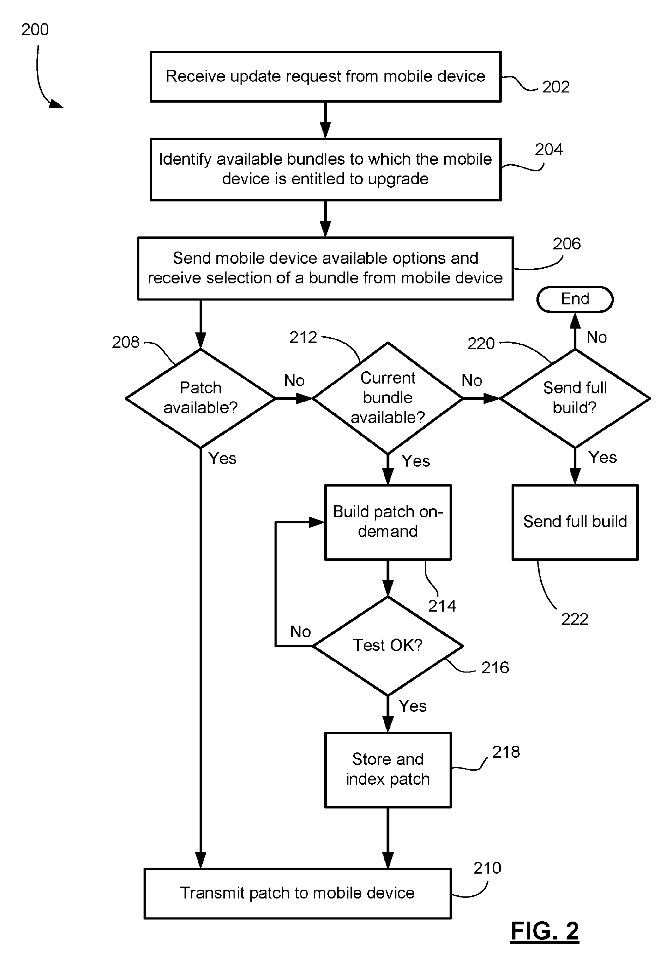

Reference is now made to Figure 2, which shows, in flowchart form, an example method 200 for updating a software bundle on a mobile device in accordance with the present application. The mobile device operates using a current software bundle.

The method 200 may be implemented by a server or multiple servers configured to communicate with a plurality of mobile devices over wired and wireless networks. The method 200 begins in operation 202 with receipt of an update request from a mobile device. The update request may specify the mobile device's model, version, vendor/carrier, geographic location, or other identifying data. The update request may specify the current software bundle operating on the mobile device. It may also identify the user by user ID, email address, or other unique identifier. In some instances, the server may query the device for some of these details following an initial update request from the device.

In operation 204, the server identifies available software bundles/builds to which the mobile device is entitled to upgrade. The entitlement to upgrade to a software bundle/build may depend on the type or version of mobile device, its current software bundle, restrictions imposed by the mobile device's associated vendor or carrier, user-based restrictions or permissions, and/or other factors. Filtering the builds/bundles present in the memory on this basis results in a subset or selection of builds/bundles to which the specific mobile device is entitled to upgrade. The server sends the list of available builds/bundles to the mobile device and receives back a selection of one of those available builds/bundles in operation 206.

In operation 208, the server assesses whether a patch is available for upgrading from the mobile device's current software bundle to the selected software bundle. The server has access to a database or other storage/memory of previously stored patches for particular upgrades that may have been generated earlier. If the desired patch is available in memory, then the method 200 jumps to operation 210, where the server sends the desired patch to the mobile device.

If the desired patch is not available in memory, then the method 200 continues at operation 212, where the server determines whether it has stored in memory a copy of the mobile device's current software bundle. If so, then in operation 214, the server creates a patch for upgrading from the current software bundle to the selected software bundle. The patch may be generated using any suitable patch generation technique, including binary difference algorithms and various optimizations thereof. The server may test the patch in operation 216 by applying the patch to a copy of the current software bundle to produce an updated bundle. It tests whether the patch successfully results in an updated bundle that identically matches the selected bundle. If not, then it may retry the patch generation, or it may exit and trigger an error message and handling routine. If the patch passes the test in operation 216, then the server stores and indexes the patch in operation 218. The server then sends the patch to the mobile device in operation 210. The mobile device is configured to apply the patch (subject to user acceptance in some implementations) once received in order to upgrade the software on the device to the selected bundle.

If the current software bundle is not available on the server in operation 212, then the server may determine whether to send the full selected bundle to the mobile device in operation 220. This determination may be based on a number of factors, including bandwidth of the device connection, etc. In one embodiment, the server queries the device as to whether it wishes to download the full bundle (the query may provide an estimate of the size of the bundle to assist the device user in evaluating whether to download the full bundle). In such a case, the server based the decision in operation 220 on the response from the device. If a download of the full bundle is not desired, then the server may exit the method 200. If a full download is selected in operation 220, then in operation 222 the server sends the full bundle to the mobile device. As discussed above, transmission may include using various lossless compression techniques.

In a variation to the method 200, in addition to obtaining details regarding the mobile device and its current bundle, the server receives information regarding compression support on the mobile device. For example, the mobile device may specify what types of compression it supports, such as Huffman, Golumb, Lempel-Ziv (various types), arithmetic, etc., or which codebooks it has available for those various types. The information may be obtained during operations 202, 204 or 206, or later if the server determines that the patch or the full bundle is to be transmitted to the mobile device. The compression may be applied only to the full bundle in some instances. In some cases, the server may determine that it should compress the patch prior to transmission.

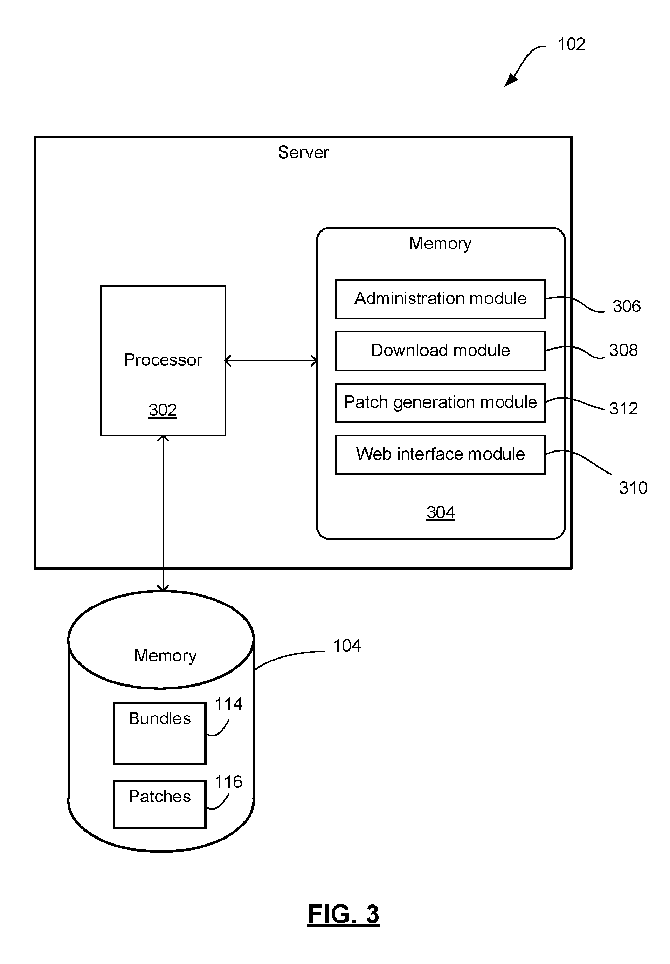

Reference is now made to Figure 3, which shows an example block diagram of an embodiment of the server 102. The server 102 may include a processor 302 (which may include multiple processors, and/or multi-core processors), and memory 304. The memory 304 may include volatile and non-volatile memory, and the memory 304 stores program instructions executable by the processor 302. When executed by the processor 302, the program instructions may configure the processor 302 to implement the operations and functions described herein. For example, the memory 304 may contain a web interface module 306 for implementing the web interface 110 (Fig. 1), and a download module 308 for implementing the download service 108 (Fig. 1) including compression, if any. The memory 304 may also contain an administration module 310 for implementing the administration service 106 (Fig. 1), and a patch generation module 312 for implementing the patch generator 112 (Fig. 1). It will be understood that the term "module" used herein is not intended to limit the embodiments to any particular programming language or technique. In some cases, various modules may be split or combined so as to achieve programming efficiencies or for a particular architecture or design goal. The modules may be combined in a single application or computer program in some instances. The application or modules may be stored on any computer-readable medium.

The server 102 has access to, or includes, the memory 104 storing the bundles 114 and the patches 116. The memory 104 may include one or more high capacity storage devices. The memory 104 and the memory 304 may be combined in one embodiment.

It will be appreciated that the server described in the present application may be implemented in a number of computing devices, including, without limitation, one or more dedicated servers, one or more suitably-programmed general purpose personal computers, or other processing devices. The mobile device(s) may include mobile telephones, smart phones, handheld computing devices, tablet computers, laptops, etc.

It will be understood that the server described herein and the modules, routines, processes, threads, or other software components implementing the described methods/processes may be realized using standard computer programming techniques and languages. The present application is not limited to particular processors, computer languages, computer programming conventions, data structures, or other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

## Claims

1. A method for administrating on-demand software updates for mobile devices from a server, the method comprising:
receiving, at the server, an update request from a mobile device, information that identifies a current software bundle resident on the mobile device, and a selection of an updated software bundle;
determining that a patch from the current software bundle to the updated software bundle is unavailable on the server;
generating the patch at the server in response to the update request; and
transmitting the patch to the mobile device.

2. The method claimed in claim 1, wherein generating the patch comprises applying a binary difference algorithm to create the patch based upon the current software bundle and the updated software bundle.

3. The method claimed in claim 2, wherein generating the patch further includes testing the patch prior to transmitting the patch by applying the patch to a copy of the current software bundle to produce a test update image and confirming that the test update image is identical to the updated software bundle.

4. The method claimed in any one of claims 1 to 3, wherein generating the patch further includes indexing and storing the patch in memory at the server for future use.

5. The method claimed in any one of claims 1 to 4, wherein, in reply to the update request, the server determines a list of bundles to which the mobile device is entitled to upgrade, and wherein the server sends the list to the mobile device, and wherein receiving a selection comprises receiving a message from the mobile device identifying one of the bundles on the list as the selected software bundle.

6. The method claimed in claim 5, wherein determining the list comprises applying policies to filter available bundles stored at the server based upon mobile device type, the current software bundle, geographic location, and any carrier/vendor restrictions.

7. The method claimed in any one of claims 1 to 6, wherein generating the patch on the server comprises determining that the current software bundle is available on the server.

8. The method claimed in any one of claims 1 to 7, wherein transmitting the patch comprises compressing the patch prior to transmission.

9. The method claimed in claim 8, wherein transmitting the patch further comprises determining compression techniques supported by the mobile device and selecting one of the compression techniques for compressing the patch.

10. A server for administrating on-demand software updates for mobile devices, the server comprising:
a processor;
a memory storing available bundles; and
one or more processor-executable software modules that, when executed, configure the processor to perform the method claimed in any one of claims 1 to 9.

11. A non-transitory computer-readable medium having stored thereon computer-readable instructions which, when executed, configure a processor to perform the method claimed in any one of claims 1 to 9.

## Amended claims

### Amended claims in accordance with Rule 137(2) EPC.

**1.** A method for administrating on-demand software updates for mobile devices from a server, the method comprising:
receiving, at the server, an update request from a mobile device, the update request including information that identifies a current software bundle resident on the mobile device, and a selection of an updated software bundle;
determining that a patch from the current software bundle to the updated software bundle is unavailable on the server;
generating the patch at the server in response to the update request; and
transmitting the patch to the mobile device.

**2.** The method claimed in claim 1, wherein generating the patch comprises applying a binary difference algorithm to create the patch based upon the current software bundle and the updated software bundle.

**3.** The method claimed in claim 2, wherein generating the patch further includes testing the patch prior to transmitting the patch by applying the patch to a copy of the current software bundle to produce a test update image and confirming that the test update image is identical to the updated software bundle.

**4.** The method claimed in any one of claims 1 to 3, wherein generating the patch further includes indexing and storing the patch in memory at the server for future use.

**5.** The method claimed in any one of claims 1 to 4, wherein, in reply to the update request, the server determines a list of bundles to which the mobile device is entitled to upgrade, and wherein the server sends the list to the mobile device, and wherein receiving a selection comprises receiving a message from the mobile device identifying one of the bundles on the list as the selected software bundle.

**6.** The method claimed in claim 5, wherein determining the list comprises applying policies to filter available bundles stored at the server based upon mobile device type, the current software bundle, geographic location, and any carrier/vendor restrictions.

**7.** The method claimed in any one of claims 1 to 6, wherein generating the patch on the server comprises determining that the current software bundle is available on the server.

**8.** The method claimed in any one of claims 1 to 7, wherein transmitting the patch comprises compressing the patch prior to transmission.

**9.** The method claimed in claim 8, wherein transmitting the patch further comprises determining compression techniques supported by the mobile device and selecting one of the compression techniques for compressing the patch.

**10.** A server for administrating on-demand software updates for mobile devices, the server comprising:
a processor;
a memory storing available bundles; and
one or more processor-executable software modules that, when executed, configure the processor to perform the method claimed in any one of claims 1 to 9.

**11.** A non-transitory computer-readable medium having stored thereon computer-readable instructions which, when executed, configure a processor to perform the method claimed in any one of claims 1 to 9.
